# EUROPEAN PATENT APPLICATION

(11) **EP 2 309 398 A1**
(43) Date of publication of application: **13.04.2011**
(21) Application number: 09757092.3
(22) Date of filing: 05.06.2009
(51) Int. Cl.: G06F 17/30

(54) **METHOD AND SYSTEM FOR PERFORMING UNSTRUCTURED DATA**

(30) Priority: 05.06.2008 CN 200810114451
(71) Applicant: Sursen Corp., Beijing 100089 (CN)
(72) Inventor: WANG, Donglin, Beijing 100089 (CN); LIU, Ningsheng, Beijing 100089 (CN)
(74) Representative: Charles, Glyndwr
(86) International application number: PCT/CN2009/072159
(87) International publication number: WO 2009/146658

(57) **Abstract**

The present invention discloses a method and system for processing unstructured data, and the method comprises: by an application, sending at least one instruction to a platform software, to issue an operation on unstructured data, wherein, the at least one instruction is independent with the storage form of the unstructured data; and by the platform software, performing the operation on the unstructured data according to the at least one instruction; wherein, the platform software has the function of processing the data within the unstructured data. By using the technical scheme, the application layer is separated from the data processing layer and the unstructured data interoperation is then achieved.

## Description

### Field of the invention

The present invention relates to a document processing method.

### Background of the invention

Information can be generally divided into structured data and unstructured data and, according to statistics, unstructured data mainly including text documents and streaming media constitute more than 70% of the information. The structure of structured data, i.e., a two-dimensional table structure, is comparatively simple. Structured data are typically processed by a database management system (DBMS). Such technique has been under development since the 1970s and was flourishing in the 1990s; the research and development and application of the technique for processing structured data are quite advanced at present. Unstructured data do not have any fixed data structure; hence unstructured data processing is very complicated.

Varieties of unstructured document processing applications are popular among users and different document formats are used at present. For example, there are various existing document formats, such as Doc, ODF, OOXML, UOF, WPS, etc.

Large companies are all working to make their own document format the standard format in the market and standardization organizations are also leaning toward the creation of a universal document format standard. Nevertheless, standard of document format, whether a proprietary document format (e.g., .doc format) or an open document format (e.g., .PDF format), leads to problems as follows:

Repeated research and development and inconsistent performance may be caused. Different applications that adopt the same document format standard have to find their own ways to render and generate documents conforming to the document format standard, which results in repeated research and development. Furthermore, some rendering components developed by some applications provide full-scale functions while others provide only basic functions. Some applications support a new version of the document format standard while others only support an old version. Hence, different applications may present the same document in different page layouts, and rendering errors may even occur with some applications so that those applications are consequentially unable to open the document.

Barrier to innovation may be happened. The software industry is known for its ongoing innovation; however, when a new function is added, descriptive information about the function needs to be combined with the corresponding standard. A new format can only be introduced when the standard is revised. A fixed storage format makes technical innovation less competitive.

Search performance may be impaired. For massive information, more indexes need to be added so as to enhance search performance, yet it is hard for a fixed storage format to allow more indexes.

Transplantability and scalability also may be impaired. Different applications in different system environments have different storage needs. For example, an application needs to reduce seek times of a disk head to improve performance when the data are saved in a hard disk, while an embedded application does not need to do that because the data of the embedded application are saved in the system memory. For example, a DBMS provided by the same manufacturer may use different storage formats on different platforms. Hence the document storage standards affect transplantability and scalability of the system.

Usually a contents management application has to handle 200 to 300 ever updating document formats, which causes great difficulty to application developers. More seriously, due to the lack of interoperation, one document can not operated by different application software, and a document generated in one process can not be opened in a next process which result that the information can not flow smoothly. After spending huge money on informationization construction, people finds that the paper is still the best interoperation platform (any pen can write on any paper, but a file created by Word application software can not be writed through Excel application software though the two application software come from the same company), and the computer is just used to edit and print, after that, all processes is based on the printed paper. Information flow can not be replaced by paper flow, which blocks the development of informationization construction greatly. The same interoperation problem also exists in other type of unstrucuted data besides the text documents, which also block the flow of digital information and the informationization construction.

Hence, it is significant to realize the interoperation of unstructured data. Howerver, in the prior art, the way of storage format standard is adapted to solve the interoperation, which is proved very limited no matte in theory or in practice. But this method requires every application is able to parse the data format perfectly and exactly and to realize all of funcations the format defines correctly. If a format (such as TXT) is simple, the application may be limited. If a format (such as ODF or OOXML) is complete, parsing the format and realizing all of function the format defines may be a very difficult job. Even IT giants such as IBM and SUN are not capable of processing OOXML, let alone small companies. Hence, It is impossible that every application can handle the format of the data, further, it is impossible the processing algorithms of every application are correct.

### Summary of the invention

The present invention provides a method and system for processing unstructured data, so as to realize interoperation of unstructured data.

A method for processing unstructured data data provided comprises:
by an application, sending at least one instruction to a platform software, to issue an operation on unstructured data, wherein, the at least one instruction is independent with the storage form of the unstructured data; and
by the platform software, performing the operation on the unstructured data according to the at least one instruction; wherein, the platform software has the function of processing the data within the unstructured data.

A system for processing unstructured data provided comprises:
an application, adapted to send at least one instruction to a platform software, to issue an operation on unstructured data, wherein, the at least one instruction is independent with the storage form of the unstructured data; and
the platform software, adapted to perform the operation on the unstructured data according to the at least one instruction; wherein, the platform software has the function of processing the data within the unstructured data.

Platform software provided has the function of processing data within the unstructured data, is adapted to:
receive at least one instruction sent by an application, wherein, the at least one instruction indicates an operation on the unstructured data, and is independent of the storage form of the unstructured data;
perform the operation on the unstructured data according to the at least one instruction.

An application provided, is adapted to:
send at least one instruction to platform software to issue an operation on the unstructured data, wherein, the at least one instruction is independent of the storage form of the unstructured data, and the platform software has the function of processing data within the unstructured data and performs the operation on the unstructured data according to the at least one instruction.

A method for processing unstructured data also provided comprises:
by a first application, issuing a first instruction to platform software, to create first abstract information;
by the platform software, receiving the first instruction and creating unstructured data corresponding to the first abstract information;
by a second application, issuing a second instruction to open the unstructured data created by the platform software;
by the platform software, receiving the second instruction, and opening and parsing the unstructured data, generating and returning second abstract information corresponding to the unstructured data to the second application;
wherein the first instruction and the second instruction conform to the same interface standard.

A system for processing unstructured data data also provided comprises:
a first application, adapted to issue a first instruction to platform software to acquire first abstract information;
the platform software, adapted to receive the first instruction and create unstructured data corresponding to the first abstract information;
a second application, adapted to issue a second instruction to open the unstructured data created by the platform software;
the platform software, further adapted to receive the second instruction, open and parse the unstructured data, acquire and return second abstract information corresponding to the unstructured data to the second application;
wherein the first instruction and the second instruction conform to the same interface standard.

A method for processing unstructured data also provided comprises:
by first platform software, parsing first unstructured data stored in a first format, acquiring first abstract information corresponding to the first unstructured data;
by a application, issuing a first instruction to acquire all information of the first abstract information; issuing a second instruction to second platform software to inform second abstract information same or similar with the first abstract information;
by the second platform software, creating second unstructured data stored in second format and corresponding to the second abstract information;
wherein the first instruction and the second instruction conform to the same interface standard.

A system for processing unstructured data data also provided comprises:
first platform software, adapted to parse first unstructured data stored in a first format, and acquire first abstract information corresponding to the first unstructured data;
a application, adapted to issue a first instruction to acquire all information of the first abstract information; issue a second instruction to second platform software to inform second abstract information same or similar with the first abstract information;
the second platform software, adapted to create second unstructured data stored in second format and corresponding to the second abstract information;
wherein the first instruction and the second instruction conform to the same interface standard.
by first platform software, parsing first unstructured data stored in a first format, acquiring first abstract information corresponding to the first unstructured data;
by a application, issuing a first instruction to acquire all information of the first abstract information; issuing a second instruction to second platform software to inform second abstract information same or similar with the first abstract information;
by the second platform software, creating second unstructured data stored in second format and corresponding to the second abstract information;
wherein the first instruction and the second instruction conform to the same interface standard.

In the prior art, one single application implements functions of from user interface to document storage, by using the method and system of processing unstructured data provided by embodiments of the present invention, it is divided into an application layer and platform software layer. The platform software is a universal technical platform with all kinds of unstructured data processing functions, and when processing the unstructured data, the application issues an instruction to the platform software and then the platform software performs corresponding operation according to the instruction. So, as long as every application and platform software comform to the same standard, different application can operate the same unstructured data via the same platform software, therefore the unstructured data interoperability is achieved. Similarly, one application may process different unstructured data through different platform software without independent development on every format of unstructured data.

### Brief Description of the drawings

Fig. 1 is a block diagram of the structure of a system for processing unstructured data in accordance with the present invention.
Fig. 2 is a block diagram of the structure of a document processing system in Preferred Embodiment of the present invention.
Fig. 3 shows the flow of of a document processing system in Preferred Embodiment of the present invention.
Fig. 4 shows the organizational structure of the universal document model in Preferred Embodiment of the present invention.

### Embodiments of the invention

The present invention is further described hereinafter in detail with reference to the accompanying drawings and embodiments. It should be understood that the embodiments described herein are used for purposes of explaining the present invention only and shall not be used for limiting the scope of the present invention.

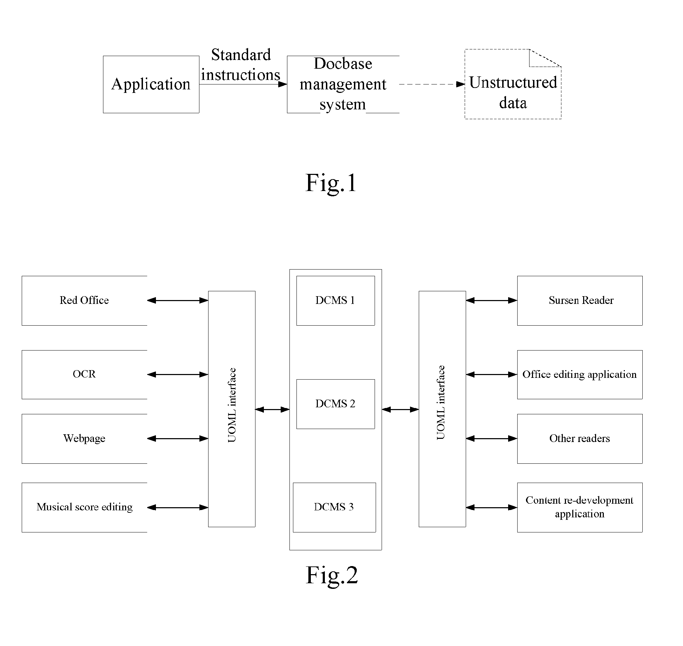

Fig. 1 is a block diagram of the structure of a system for processing unstructured data in accordance with the present invention. As shown in Fig. 1, the system for processing unstructured data includes an application and platform software, wheiren, storage data is unstructured data and is at the side of the platform software.

The application, adapted to issue at least one instruction to a platform software, to indicate an operation on unstructured data (i.e., storage data), wherein, the at least one instruction is independent with the storage form of the unstructured data; and
the platform software, adapted to perform the operation on the unstructured data according to the at least one instruction; wherein, the platform software has the function of processing the data within the unstructured data. Simply, the platform software has enough powerful processing ability on unstructured data to meet the requirement of different application processing different unstructured data and performing the operations on the unstructured data according to the instruction. In an embodiment, the platform software has the function of creating, opening, reading, writing and closing the unstructured data.

In an embodiment, the interface standard is defined based on abstract information. The abstract information is corresponding to storage data, and is acquired by abstracting one or more feature from the storage data but is indenpent with the storage format of the storage data. In another embodiment, the abstract information describes presentation effect of the storage data. In another embodiment, the abstract information also can describe security control, document organization, interactive information (such as navigation and thread), metadata and other non-presentation features. For the two-dimensional static data (text documents), the presentation effect may be visual appearance of the text document, also known as layout. For other multi-dimensional data or streaming data, the presentation effect may be a sound, dynamic Visual effects and multi-dimensional visual effects.

So, what the instruction issued by the application indicates is the operation on abstract information. After receiving the instruction from the application, the platform software maps the operation on the abstract information to the operation on the storage data corresponding to the abstract information, and then performs the operation on the storage data.

The storage data refer to various kinds of information maintained or stored on a storage device (e.g., a non-volatile persistent memory such as a hard disk drive, or a volatile memory such as RAM) for long-term usage and such data can be processed by a computing device. The storage data may include complete or integrated information such as an office document, an image, or an audio/video program, etc. Herein, the "long-term" is not the requirement of the storage medium but the form of the data, it means that the data are not dynamic storage (such as a memory pointer in a runtime instance), but can be used by other applications or other runtime instance.

The storage data are typically contained in one disk file, but such data may also be contained in multiple (related) files or in multiple fields of a database, or an area of an independent disk partition that is managed directly by the platform software instead of the file system of the OS. Alternatively, storage data may also be distributed to different devices at different places. Consequently, formats of the storage data may include various ways in which the information can be stored as physical data as described above, not just formats of the one or more disk files.

In an embodiment, the unstructured data are a document, the storage data of the unstructured data can be referred to as document data and it may also contain other information such as security control information or editing information in addition to the information of presentation information of the document. Correspondingly, the abstract information can be referred to as abstract document.

Here, the word "document" has two meanings. It may refer to information that can be printed on paper, also called as text document, such as static two-dimension information. It may also refer to any information that can be presented, including multi-dimension information or stream information such as audio and video. The present invention does not strictly distinguish the two usages.

In this way, the application seems to perform an operation on an abstract document, and it need not consider the storage form of the document data. The platform software is in charge of maintaining the corresponding relationship between the abstract document and the storage data (such as a document file with specific format), e.g., the platform software maps an operation performed by the application on the abstract document to an operation actually on the storage data, performs the operation on the storage data, and returns the result of such operation back to the application when the return of the result is requested.

In some embodiments, the abstract document can be extracted from the storage data, and different storage data may correspond to the same abstract document. For example, when the abstract document is extracted from visual appearance (also called layout) of a document, different storage data having the same visual appearance, no matter the ways in which they are stored, may correspond to the same abstract document. For another example, when a Word file is converted to a PDF file that has same visual appearance, the Word file and the PDF file are different storage data but they correspond to the same abstract document. Even when the same document is stored in different versions of Word formats, these versions of Word files are different storage data but they correspond to the same abstract document.

In some embodiments, in order to record the visual appearance properly, it would be better to record position information of visual contents, such as text, image and graphic, together with resources referenced, such as linked pictures and nonstandard fonts, to ensure fixed position of the visual contents and to guarantee that the visual contents is always available. A layout-based document sush as SEP meets the above requirements and is often used as storage data of the platform software.

The storage data created by platform software is called universal data since it is accessible by standard instructions and can be used by other applications that conform to the interface standard. Besides universal data, an application is also able to define its own unique data format such as office document format. After opening and parsing a document with its own format, the application may request acquiring a corresponding abstract document by issuing one or more standard instructions, and the platform software creates the corresponding storage data according to the instructions. Although the format of the newly created storage data may be different from the original data, the newly created storage data (the universal data) correspond to the same abstract document with the original data, e.g., it resembles the visual appearance of the original data. Consequently, as long as any document data (regardless of its format) corresponds to an abstract document, and the platform software is able to create a storage data corresponding to the abstract document, any document data can be converted to an universal data that corresponds to the same abstract document and is suitable to be used by other applications, thus achieving document interoperability between different applications conforms to the same interface standard.

For a non-limiting example, an interoperability process involving two applications and one platform software is described below. The first application creates first abstract document by issuing a first instruction to the platform software, and the platform software receives the first instruction from the first application and creates storage data corresponding to the first abstract document. The second application issues a second instruction to the platform software to open the created storage data, and the platform software opens and parses the storage data according to the second instruction, generate second abstract document corresponding to the storage data. Here, the second abstract document is identical to or closely resembles the first abstract document and the first and second instructions conform to the same interface standard, hence, the second application is able to open the document created by first application.

For another non-limiting example, another interoperability process involving one application and two platform software is described below. The first platform software parses first storage data in first data format, arcquires a first abstract document corresponding to the storage data. The application retrieves all information from the first abstract document by issuing a first instruction to the first platform software. The application creates a second abstract document which is identical to or closely resembles the first abstract document by issuing a second instruction to the second platform software. The second platform creates second storage data in second data format according the second instruction. Here, the first and second instructions conform to the same interface standard, enabling the application to convert data between different formats and retain the abstract feature unchanged.

The interoperability process involving multiple applications and multiple platform software can be deduced from the two examples above.

Due to limiting factors such as document formats and functions of relative software, the storage data may not be mapped to the abstract document with 100% accuracy and there may be some deviations. For a non-limiting example, such deviations may exist regardless of the precision floating point numbers or integers used to store coordinates of the visual contents. In addition, there may be deviations between the displaying/printing color and the predefined color if the software used for displaying/printing lacks necessary color management functions. If these deviations are not significant (for non-limiting examples, a character's position deviated 0.01 mm from where it should be, or an image with lossy compression by JPEG), these deviations can be ignored by users. The degree of deviation accepted by the users is related to practical requirements and other factors, for example, a professional art designer would be stricter with the color deviation than most people. Therefore, the abstract document may not be absolutely consistent with the corresponding storage data and displaying / printing results of different storage data corresponding to the same abstracted visual appearance may not be absolutely same with each other. Even if same applications are used to deal with the same storage data, the presentations may not be absolutely the same. For example, the displaying results under different screen resolutions may be slightly different. In the present invention, "similar" or "consistent with" or "closely resemble" is used to indicate that the deviation is acceptable, (e.g., identical beyond a predefined threshold or different within a predefined threshold). Therefore, storage data may correspond to, or be consistent with, a plurality of similar abstract documents.

The corresponding relationship between the abstract document and the storage data can be established by the platform software in many different ways. For example, the corresponding relationship can be established when opening a document file, the platform software parses the storage data in the document file and forms an abstract document to be operated by the application. Alternatively, the corresponding relationship can be established when platform software receives an instruction indicating creating an abstract information from an application, the platform software creates the corresponding storage data. In some embodiments, the application is aware of the storage data corresponding to the abstract information being processed (e.g., the application may inform the platform software where the storage data are, or the application may read the storage data into memory and submit the memory data block to the platform software). In some other embodiments, the application may "ignore" the storage data corresponding to the operated abstract document. For a non-limiting example, the application may require the platform software to search on Internet under certain condition and open the first searched documents.

Generally speaking, the abstract information itself is not stored on any storage device. Information used for recording and describing the abstract information can be included in the corresponding storage data or the instruction(s), but not the abstract information itself. Consequently, the abstract information can be called alternatively as virtual unstructured data.

In some embodiments, the abstract information may have a structure described by a abstract model, such as a universal document model described hereinafter when the unstructured data are document data. Here, the statement "document data conform to the universal document model" means that abstract document extracted from the document data conforms to the universal document model. Meanwhile, the abstract information can be considered as an instance of an abstract model. In an embodiment, the abstract model and abstract information are both tree-structured.

In practice, the abstract model should have the ability of describing arbitrary value (or its similar value) of abstract features. For example, when the abstract feature is layout, the abstract model should have the ability to describe any layout. In practice, as long as the layout represented by the abstract model ressembles the layout described, it is accepted. Thus, for any text document, an abstract model can be used to describe its layout and then a abstract document ressembling its layout is acquired. Similarly, when the abstract feature is audio, the abstract model should have the ability to describe any sound.

There are various ways to issue the instruction so as to operate on the abstract information, such as issuing a command string or invoking a function. An operation on the abstract information can be denoted by instructions in different forms. The reason why invoking a function is regarded as issuing the instruction is that addresses of difference functions can be regarded as different instructions respectively, and parameter(s) of the function can be regarded as parameter(s) of the instruction.

In an embodiment, the abstract model describing the abstract information defines a variety of object types; correspondingly, the abstract information is consisted of these types of objects. Then, operation on the abstract information by the application can be decomposed to operations on these objects, such as adding, deleting, reading and writing. Therefore, as long as the standard instructions includes instructions of operations on these objects, such as adding, deleting, reading and writing, and the platform software is capable of performing the function of these instructions (i.e., mapping the operations describing by those instructions to the operations on storage data and performing the operations on the storage data), the platform software meets the operation requirement of various applications on the storage data, can become a universal technology platform. It should be noted that this is only a way to achieve the universal platform software, and there are also other ways to achieve the same purpose.

In another way, the standard instruction also can be realized by defining an operation action and an object to be operated respectively and then combining the two, called as a method of "an operation action + an object to be operated". The object in the instruction may either be the same or different from an object of the abstract information. For example, suppose the abstract model includes a text object type, when setting the position of a text object of a document, the object in the instruction may be the text object, which is the same as the object of the universal document model, or it may be a position object of the text which is different with the object of the universal document model. In actual practice, it will be convenient to unify the objects in the instructions and the objects of the abstract model.

In addition, the skill in the art can understand that, in many cases, in an embodiment of the present invention, a abstract model may not apply to all of the unstructured data, often only for a subset of unstructured data, such as a subset of unstructured data with a specific abstract feature (such as presentation effect). Abstract features are abstracted from the subset of the unstructured data, and then universal data with the same or similar abstract featurer are created by the standard instructions. Herein, the abstract model can describe the abstract feature, the abstract information (or called as abstract model instance) can be acquired by describing the abstract feature with the abstract model and what the standard instruction describes is the operation on the abstract information.

Using the method described above, the division and cooperation of the application and the platform software are formed, to make the document processing more convenient. In practice, it may not strictly distinguish the abstract information and the storage data. The application also may directly perform operations on the document data through instruction. Even in this case, in order to maintain generality, the instruction should be independent of the specific formato of the document data.

Fig. 2 is a block diagram of the structure of a document processing system in Preferred Embodiment of the present invention. As shown in Fig.2, in an embodiment, an application, e.g., Red Office, OCR, webpage generation software, musical score editing software, Sursen Reader, Microsoft Office, or any other reader applications, instructs platform software (in the embodiment, it refers to a DoCbase Management System) to perform an operation on a document by issuing an instruction comforming to a unified interface standard. The DCMSs may have different models developed by different manufacturers, but the application developers always use the same interface standard so that the DCMSs of any model from any manufacturer are compatible with the application.

In the embodiment, there are multiple platform software, respectively marked as DCMS 1, DCMS 2 and DCMS 3. The DCMSs process documents conforming with a universal document model, e.g., create, save, display and present documents, according to a standard instruction issued by the application. In the present invention, different applications may invoke the same DCMS at the same time or at different time, and the same application may also invoke different DCMSs at the same time or at different time.

It can thus be seen that the present invention enables the application layer to be separated from the data processing layer -- the platform software in deed. Since the application only issues the instruction indicating operation on the storage data, it only pays attention on the abstract information, but does not consider the specific storage format. Hence, the specific format of the storage data is no longer associated with any specified applications and an application no longer needs to deal with document formats. Though it is really hard work to perform various operaion on a data of a format thoroughly and correctly, the hard work is handled by the platform software, and the application only invokes an instruction to "make a command", which is easy to handl for an application developer.Hence, different applications can edit the same storage data via the same platform software, to achieve a good interoperability among different applications. In practice, applicable unstructured data can be converted into universal data with the same or similar abstract features, and then, various applications can issue instruction to the platform software to operate the universal data. Hence, excellent unstructured data interoperability is extended.

With the present invention, the industry may be divided into different divisions, duplicated development can be avoided, and the industry may evolve to be more professional, thorough and accurate since basic operations on the storage data are performed in the platform software system and need not be replicated in applications. The professional developers of the platform software can guarantee its quality, completeness, and accuracy. Application providers and users may choose the best platform softwre provider to achieve accuracy and consistency in unstructured data processing. As the universal technology platform, the platform software can be used by millions of applications all over the world, Hence it can be mastered by some professional firms with relevant expertise and adequate R&D resource and invested heavily, in this case, the cost allocated to each application is much lower that of an application vendor developing by its own much, and also the accuracy, reliability and performance are much higher. Further, after a rational division of the industry is formed, the platform software vendors and the application vendors will compete in their own respectivle field, and the situation that Microsoft Word monopolises the application software based on its document format can be avoided. The platform software vendors can also add new features beyond the standard to attract users, so the standard does not restrain innovation.

The present invention improves system performance and provides better transplantability and scalability. Any platform with any function can use the same interface; therefore, the system performance can be optimized continuously without altering the interface standard, and the system may be transplanted to different platforms.

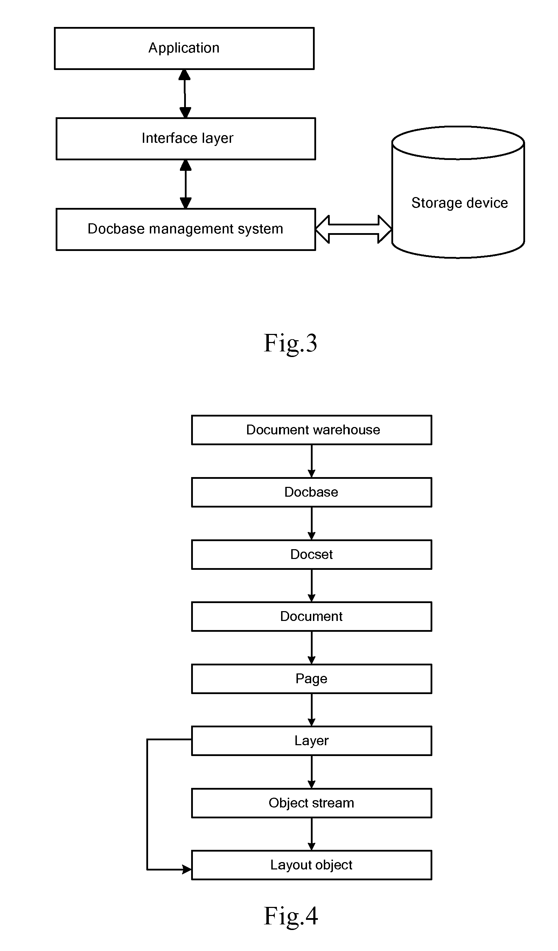

Fig. 3 shows the flow of of a document processing system in Preferred Embodiment of the present invention. As shown in Fig.3, the document processing system mainly includes an application, an interface layer, platform software (in the embodiment, refers as a DCMS) and a storage device.

The application is in the application layer of the document processing system, and includes any of the existing document processing and contents management applications. When the application wants to perform an operation on a document, it sends an instruction conforming to the interface standard, which indicates an operation on an abstract document, wheirin the abstract document is independent of the storage form of the document. So, even there are multiple documents in the storage device, the application need not pay any attention on the storage forms of the documents.

Specifically, a universal document model is used to describe the document data, and then the abstract document corresponding to the document data is acquired. The universal document model is abstracted form the presentation effect of the text document and can compatible with documents with various formats to be processed by various applications. In embodiment, the interface standard is based on the universal document model.

The DCMS performs specific document operations according to the standard instruction issued by the application. The DCMS is the core of the document processing system and has the ability of processing data within a document, e.g., has the ability of opening, reading, writing, and deleting document data. Spevifically, the DCMS parses the document data, maps operations on the abstract document to operations on document data, and performs the operations on the document data.

The interface layer conforms to the interface standard for interaction between the application layer and the DCMS. The interface standard not only defines various instructions for processing document, but also the way how application issues instructions to the DCMS.

The application layer sends a standard instruction to the DCMS via the interface layer and the DCMS returns the result of the corresponding operation to the application layer via the interface layer. Preferably, the interface layer includes an upper interface unit and a lower interface unit. The application can send a standard instruction from the upper interface unit to the lower interface unit, and the DCMS receives the standard instruction from the lower interface unit. The lower interface unit is further used for returning the result of the operation performed by the DCMS to the application through the upper interface unit. The skill in the art can understand that, it is needed to develop the interface layer in pratical software development, as long as the application and the platform software confirm to the same interface standard.

Based on the architecture of the application/ platform software in the present invention, different applications can process the same document through the same DCMS, and also one application can process different documents through different DCMSs.

The storage device is the storage layer of the document processing system. A common storage device includes a hard disk or memory, and also can include a compact disc, flash memory, floppy disk, tape, remote storage device, or any kind of device that is capable of storing data. In the storage device, the docbase data can be stored and organized freedomly. For example, the DCMS may save all files in a docbase in a disk file, or create one disk file for one document and organize the documents by using the file system functions of the operating system, or create one disk file for one page, or allocate space on disk and manage the disk tracks and sectors without referencing to the operating system. The docbase data can be saved in a binary format, in XML, or in binary XML. The page description language (used for defining objects including texts, graphics and images in a page) may adopt PostScript, or PDF, or SPD (a page description language invented by Sursen company), or a customized language. To sum up, any definition method that enables the interface standard to achieve the functions described herein is acceptable.

An embodiment of an abstract document model will be described as follows, called as a universal document model. The universal document model can be defined with reference to the features of paper since paper has been the standard means of recording document information, and the functions of paper are sufficient to satisfy the practical needs in work and living.

Firstly, layout of text documents is abstracted. The universal document model needs to describe any layout information of text documents. Generally, layout information of the text documents can always be categorized into three classes: texts, graphics and images. Besides able to describe the layout of the text documents, the universal document model is necessary to further describe organization information of the text documents.

Fig. 4 shows the organizational structure of the universal document model in Preferred Embodiment of the present invention. As shown in Fig.4, generally, a universal document model includes document warehouse, docbase, docset, document, page, layer, object stream, object used to describe layout (refer as layout object for short) and maybe other object types. There may be a subset type under the docset type, and further a subset type under the subset type. Document, page and layout object are necessay object type, and other object types may be omitted according to practical situation.

In addition, under the object types, such as document warehouse, docbase, docset, document, page, layer, etc., there may be a shared object respectively. The shared object may be a shared font or image. For example, when a document uses a specific typeface or character, corresponding font shall be embedded into the documents to guarantee identical output on screens/printer of different computers. The font resources shall be shared to improve storage efficiency, i.e., only one font needs to be embedded when a same character is used for different places. An image sometimes may be used in different places, e.g., the image may be used as the background images of all pages or as a frequently appearing company logo and it will be better to share the image, too.

In an embodiment, the universal document model may further describe digital feature information of text documents, such as metadata, navigation information, thread information and thumbnail image, history, etc. Those abstract information can be considered as helper objects. Under the object types, such as document warehouse, docbase, docset, document, page, layer, etc., there may be a helper object respectively.

In order to further guarantee the document processing security, the universal document model may further describe the security control information of text documents. At this time, the universal document model also defines role and privilege.

A universal document model instance, i.e., an abstract document, can be acquired by using a universal document model describing a document. The abstract document may include an object of document warehouse, an object of docbase, an object of docset, an object of document, an object of page, an object of layer, an object of object stream, an object of layout object (hereinafter refer as a a document warehouse object, docbase object, docset object, document object, page object, layer object, object stream object, layout object for short), etc..

Document warehouse consists of one or multiple docbases. The relation among docbases is not as strictly regulated as the relation among hierarchies within a docbase. Docbases can be combined and separated simply without modifying the data of the docbases, and usually no unified index is set up for the docbases (especially a fulltext index), so most search operations on the document warehouse traverse the indexes of all the docbases without an available unified index.

Every docbase object may include one or multiple docset objects, and/or an arbitrary number of docbase helper objects, and/or an arbitrary number of docbase shared objects.

The docbase helper object may include a metadata object, role object, privilege object, plug-in object, index information object, script object, digital signature object, and history object, etc. The docbase shared object may include an object that may be shared among different documents in the docbase, such as a font object and an image object.

Every docset object may include one or multiple document objects, and/or an arbitrary number of docset objects, and/or an arbitrary number of docset helper objects. The docset helper object may include a metadata object, digital signature object, and history object. When the docset object includes multiple docset objects, the structure is similar to the structure of a folder including multiple folders in the Windows system. A document object may belong to a docset object, or may be belong to multiple docsets at the same time. A docbase is not a simple combination of multiple documents but a tight organization of the documents, which can create the great convenience after unified search indexes are established for the document contents.

Correspondingly, the interface standard can include instructions of organization management, query and security control, of multiple documents.

Every document object may include one or multiple page objects in a certain order (e.g., from the front to the back), and/or an arbitrary number of document helper objects, and/or an arbitrary number of document shared objects. The document helper object includes a metadata object, font object, navigation object, thread object, thumbnail image object, digital signature object, and history object. The document shared object includes an object that may be shared by different pages in the document, such as an image object and a seal object. The size of the pages may be different. Rather than in a rectangular shape, a page may be in a random shape expressed by one or multiple closed curves.

Every page object may include one or multiple layer objects in an order (e.g., from the top to the bottom), and/or an arbitrary number of page helper objects. The page helper object includes a metadata object, digital signature object and history object. When a page consists of one or multiple layers and one layer is overlaid with another layer like one piece of glass over another piece of glass. Correspondingly, the interface standard includes instructions for operations on the layers, storage and extraction of a source file corresponding to a layer in a document.

Every layer object consists of one or multiple layout objects, and/or an arbitrary number of object streams, and/or an arbitrary number of layer helper objects. The layer helper object includes a metadata object, digital signature object, and history object. The object stream includes an arbitrary number of layout objects, and/or an arbitrary number of object streams, and/or optional digital signature objects.

The layout objects mean statuses (typeface, character size, color, ROP, etc.), texts (including symbols), graphics (line, curve, closed area filled with specified color, gradient color, etc.), images (TIF, JPEG, BMP, JBIG, etc.), semantic information (title start, title end, new line, etc.), source file, script, plug-in, embedded object, bookmark, hyperlink, streaming media, binary data stream, etc.

The layout object may be an arbitrary number of status object, text object, line object, curve object, arc object, path object, gradient color object, image object, streaming media object, metadata object, note object, semantic information object, source file object, script object, plug-in object, binary data stream object, bookmark object, and hyperlink object.

The status object may be a character set object, typeface object, character size object, text color object, raster operation object, background color object, line color object, fill color object, linetype object, line width object, line joint object, brush object, shadow object, shadow color object, rotate object, outline typeface object, stroke typeface object, transparent object, and render object. The text object may be a symbol object. The graphic object may be a line object, a curve object, a closed area object, a gradient color object, etc., The image object may be a TIF object, a JPEG object, a BMP object, a JBIG object, etc..

The abstract document may further include one or multiple roles, and every role is granted a certain privileges. Regard docbase, docset, document, page, layer, object stream, metadata etc.,as a unit for granting privileges to a role, and define whether the role has privileges, such as any one or any combination of read privilege, write privilege, copy privilege, print privilege, re-license privilege and bereave privilege, on the units. If a access privilege is granted to a role on an object, the privilege is also granted on all subobject of the object.

One skilled in the art can understand that the universal document model can be enhanced or simplified based on the above description. If a simplified document model does not include a docset object, the docbase object shall include a document object directly. And if a simplified document model does not include a layer object, the page object shall include a layout object directly. It can be understood that a minimum universal document model includes only a document object, page object and layout object. The layout object includes only a text object, line object and image object.

The way how to define the interface standard is explained hereinafter. In an embodiment, the interface standard defines various instructions based on the abstract document and used for document operations, and ways how to issue instructions by the application to the DCMS.

The interface standard applies an "operation action + object to be operated" approach. Using this approach, multiple operation actions and objcets should be defined and the instruction should contain the operation action and object to be operated. An operation action may be combinated with multiple operation objects and an operation object may also be combinated with multiple operation actions. It cannot be automatically assumed that each combination of each object plus each action gives a meaningful operation instruction. Some combinations are just meaningless. This approach enables the interface standard easy to study and understand, more stable, and easy to add an object or action when the interface standard is extended in the future. For example, there are 10 operation action and 30 operation objects (objects to be operated), if using the "operation action + object to be operated" approach, there may be only 10+30=40 instructions; but if without the "operation action + object to be operated" approach, there may need 10*30=300 instructions. It should be noted that, not every instruction contain one operation action or one object to be operated, the number of the operation action and operation object in an instruction may be arbitrary (zero, one or multiple). And also, the object to be operated may be an object in the abstract document, or may be not.

In an embodiment, 7 operation actions is defined: open, close, get, set, delete, insert and query.

The object to be operated may be an object of an abstract document obtained by using a universal document model describing the document.

Hence a combination of an operation action and an operation object can indicate an operation, for example:
Open a docbase object: used for creating or opening a docbase;
Close a docbase object: used for closing a docbase;
Get an object: used for getting an object list, object related attribute, and data;
Set an object: used for setting / modifying object data;
Insert an object: used for inserting the specified object or data;
Delete an object: used for deleting an object; and
Query for an object: used for searching for contents in document(s) according to the specified object, maybe accurately or vaguely.

The interface standard may also be defined by using a function approach that is not an "operation action + object to be operated" approach. For example, an interface function is defined for each operation on each object. The disadvantage of the approach is that: it needs to define one instruction for each legal operation on each object, which is very complicated.

The way of issuing instructions by the application to the DCMS may be: generating a command string in a pre-defined format for an instruction and issuing the command string in the pre-defined format by the application to the DCMS; or providing an interface function by the platform software and invoking by the application the interface function to the DCMS, or defining an instruction as a method of a class, i.e., encapsulating an object to be operated as an object classes of Object Oriented Programming language and defining an operation action to be performed on the object as a method of the class, and invoking by the application the method of the object class to the DCMS.

Particularly, when an instruction of getting a page bitmap is defined in the interface standard, it will be crucial to layout consistency and document interoperability.

Using the standard instructions defined in the embodiment of the present invention, operations can be performed on object within the document, such as text, rectangular; however, the document management system in the pior art only can perform operations on document-level.

When the way of issuing instructions by the application to the DCMS is generating a command string in a standard format, the command string can be represented by XML.

UOML standard issued by an international open standard organization OASIS is an embodiment of using XML to represent the command string. When the application want to operate on the document, it generates a UOML instruction accoding to the UOML standard and sends the UOML instruction to the DCMS, which represents issuing corresponding instruction to the DCMS.

In an embodiment, every operation action corresponds to a XML element and every operation object also corresponds to a XML element. When describing an instruction, a string of "operation action + object to be operated" is generated by make the XML element corresponding to the object to be operated as a sub-element of the XML element corresponding to the operation action. For example, firstly an operation action INSERT, which has three sub-elements: parent (the handle of the parent object), xobj (description of the object to be inserted), and pos (the position where to insert the object), is defined, and then following instructions can be used to insert the object:

```
     <UOML_INSERT>
        <parent val= "123.456.789"/>
        <pos val=" 1"/>
        <xobj>
             <docset/>
     </xobj>
     </UOML_INSERT>
```

It should be noted that, although the above instructions are defined with XML, prefix expressions of standard XML format such as "<?xml version="1.0" encoding="UTF-8"?>" and "xmlns:xsi= "http://www.w3.org/2001/XMLSchema-instance"" are omitted to simplify the instructions; however, those familiar with XML may add the expressions at will.

The instructions may also be defined in a language other than the XML, e.g., the instructions can be constructed like PostScript, and in such a case the above examples of instructions will be changed into:

```
     /docset, 1, "123.456.789", /Insert
```

Instructions in other string formats may also be defined according to the same theory; the instructions may even be defined in a non-text binary format.

In the above example, the instruction is formed in"operation action + object to be operated" approach. Another embodiment in which one instruction is defined for every operation on every object is explained hereinafter. In this embodiment, inserting a docset can be indicated by "UOML_INSERT_DOCSET" and inserting a page can be indicated by "UOML_INSERT_PAGE". The definition details are as follows:

```
     UOML_INSERT_DOCSET: used for inserting a docset in a docbase
     Attributes: N/A
     Sub-elements
     parent: the handle of the docbase
     pos: the position of the docset to be inserted
```

Return value: when the operation succeeds, a sub-element "handle" is included in the UOML_RET to indicate the handle of the newly inserted docset

Therefore the instruction shall appear as follows:

```
     <UOML_INSERT_DOCSET>
        <parent val="123.456.789"/>
        <pos val=" 1"/>
     </UOML_INSERT_DOCSET>
```

An embodiment in which the interface standard is implemented by invoking a function is explained hereinafter. The embodiment, called the UOI, is explained with reference to C++ language.

In the embodiment, in correspondence with the embodiment of the "operation action + object to be operated" approach, UOI_Object is defined as the base class of all objects and a function is defined for every operation action respectively. The parameter of those functions can be a pointer or reference to the base class so that the functions can be applied to all objects.

Define a UOI return value structure:

```
     struct UOI_Ret {
        BOOL m_ bSuccess;
         CString m_Errlnfo; };
     Then, the basic class of all UOI objects is defined.
     class UOI_Object {
     public:
         enum Type {
             TYPE_DOCBASE,
             TYPE_DOCSET,
             TYPE_DOC,
     TYPE_PAGE,
     TYPE_LAYER,
     TYPE_TEXT,
     TYPE_CHARSIZE,
     ......
};
        Type m_Type;
        UOI_Object();
     virtual - UoI_Object();
     static UOI_Object *Create(Type objType);
};
```

Define following UOI functions in correspondence with the operation actions: .
UOI_RET UOI_Open (char *path, BOOL bCreate, HANDLE *pHandle);
UOI_RET UOI_Close (HANDLE handle, HANDLE db_handle);
UOI_RET UOI_GetHandle (HANDLE hParent, int nPos, HANDLE *pHandle); UOI_RET UOI_GetObjType (HANDLE handle, UOI_Object ::Type *pType);
UOI_RET UOI_GetObj (HANDLE handle, UOI_Object *pObj);
UOI_RET UOI_GetPageBmp (HANDLE hPage, RECT rect, void *pBuf);
UOI_RET UOI_SetObj (HANDLE handle, UOI_Object *pObj);
UOI_RET UOI_Insert (HANDLE hParent, int nPos, UOI_Object *pObj, HANDLE *pHandle = NULL);
UOI_RET UOI_Delete (HANDLE handle);
UOI_RET UOI_Query (HANDLE hDocbase, const char *strCondition, HANDLE *phResult, int *pResultCount).

Define various UOI objects, making UOI_Doc as an exmaple:

```
     class UOI_Doc public UOI_Object {
     public:
        UOI_MetaData   m_MetaData;
        int              m_nPages;
        UOI_Page         **m_pPages;
     int             m_nFonts;
     UOI_Font        **m_pFonts;
     UOI_Navigationm_Navigation;
     UOI_Thread      m_Thread;
     UOI_MiniPage *m_pMiniPages ;
     UOI_Signature m_Signature;
     int            m_nShared;
     UOI_Obj        *m_pShared;
     UOI_Doc();
     virtual ∼UOI_Doc() ;
     };
```

A function used for inserting a new object may be as follows:

```
     HANDLE InsertNewObj (HANDLE hParent, int nPos, UOI_Object ::Type type)
     {
     UOI_Ret ret;
     HADNLE handle;
     UOI_Obj *pNewObj = UOI_Obj::Create(type);
     if (pNewObj == NULL)
        return NULL;
     ret = UOI_Insert(hParent, nPos, pNewObj, &handle);
     delete pNewObj ;
     return ret.m_bSuccess ? handle : NULL;
 }
```

Different interface standards can be designed in the same way as described above for applications developed based on Java, C#, VB, Delphi, or other programming languages.

As long as an interface standard includes no feature associated with a certain operation system (e.g., WINDOWS, UNIX / LINUX, MAC OS, SYMBIAN) or hardware platform (e.g., x86CPU, MIPS, PowerPC), the interface standard can be applied cross-platform so that different applications and DCMSs on different platforms can use the same interface standard. Even an application running on one platform may invoke a DCMS running on another platform to proceed with an operation. For example, when the application is installed on a client terminal in a PC using Windows OS and the DCMS is installed on a server in a mainframe using Linux OS, the application can still invoke the DCMS on the server to process documents just like invoking a DCMS on the client terminal.

When the interface standard includes no feature associated with a certain program language, the interface standard is further free from dependency on the program language. It can be seen that the instruction string facilitates the creation of a more universal interface standard independent of any platform or program language, especially when the instruction string is in XML, because all platforms and program languages in the prior art have easy-to-get XML generating and parsing tools. Therefore, the interface standard will fit all platforms perfectly and be independent of program languages.

More interface standards can be developed based on the same method described above, and are included within the protective scope of the present invention.

One skilled in the art can understand that more operating instructions can be added to the interface standard based on the embodiments described above in the method of constructing instructions as described above, and the operating instructions can also be simplified based on the embodiments.When the document model is simplified, the operating instructions can be simplified accordingly. The interface standard can include at a minimum the operating instructions for creating a document, creating a page, and creating a layout object.

When receiving an operating instruction from the application, the platform software performs an operation on the actual storage data according to the received operating instruction.

In an embodiment, the docbase data are described in XML and an XML tree is built according to the abstract document. Operations on the storage data by the DCMS is actually operations on XML tree. For example, when performing a creating operation according to the instruction of the application, the platform software adds a node corresponding to the operation object in the instruction in the XML tree. Also in another example, when performing a deleting operation according to the instruction of the application, the platform software deletes a node in the XML tree. An operation of setting sets the attributes of a corresponding node, and an operation of getting gets the attributes of the corresponding node and returns the attribute information to the application, and an operation of querying traverses all related nodes.

Building the XML tree corresponding to the document data may be as follows. Firstly, XML is used for describing every object, i.e., an XML tree is created for each object, and then an XML file is created according to the XML tree of each object. Some objects show simple attributes and the XML trees corresponding to the objects will have only the root node; some objects show complicated attributes and the XML trees corresponding to the objects will have root node and subnodes. The description of the XML trees can be created with reference to the XML definitions of the operation objects given in the foregoing description.

For example, when a new docbase is created, a new XML file (XML tree) whose root node is the docbase object is created. Every sub object of the docbase object corresponds to a node in the XML tree. When an instruction from the application indicates inserting a new object (e.g., a text object) into the docbase, the platform software inserts an XML tree corresponding to the new object under the corresponding parent node (e.g., a layer). When an instruction from the application indicates deleting an object, the platform software deletes the node corresponding to the object and the subnodes thereof are deleted. The deletion starts from a leaf node in a tree traversal from the bottom to the top. When an instruction from the application indicates setting an attribute of an object, the platform software sets the attribute of the node corresponding to the object as the specific value. If the attribute is expressed as an attribute of a subnode, the attribute of the corresponding subnode is set to the specific value. When an instruction from the application indicates getting an attribute of an object, the platform software accesses the node corresponding to the object and retrieves the attribute of the object according to the corresponding attribute and subnodes of the node. When an instruction from the application indicates getting the handle of an object, the platform software returns the XML path of the node corresponding to the object. When an instruction from the application indicates copying an object (e.g., a page) to a specified position, the platform software copies the whole subtree starting from the node corresponding to the object to a position right under the parent node corresponding to the specified position (e.g., a document). If the instruction from indicates copying the object to another docbase, the platform software also copies an object referenced by the subtree (e.g., an embedded font) to the other docbase. When an instruction from the application indicatesgetting a page bitmap of a specific area, the platform software creates a blank bitmap in a specified bitmap format and in the same size of the specified area, traverse all layout objects of the specified page, renders and displays every layout object in the specified area (including the objects that have only parts in the area) in the blank bitmap.

More search patterns besides the conventional keyword search can be offered by the query instruction. Besides the plain text information, the operation object in the query instruction may also be other layout objects, such as any one or any combination of a font object, character size object, text color object, position object, etc. By using the query instruction provided by the present invention, a more powerful search pattern can be provided by fully utilizing information in documents. Not only plain text information is extracted from the document, but also additional information, such as font information, character size information, text color information, position information and other special presentation effect inforamtion, is extracted. For example, a character "sursen" with in font Times New Roman, or in any size larger than 20 points, or in blue, or in outline typeface , or in the footers, or that is overlapped on an image may be found.

Workflow is further explained with reference to an example in which Application A creates a document and Application B edits the document. UOI is used as the interface standard in the example.

Application A sends an instruction *UOI_Open ("c:\\sample\\mydocbase.sep", TRUE, &hDocBase)* to create a docbase *c:\sample\mydocbase.sep,* and save the handle of the docbase in *hDocBase;*

Application A sends an instruction *hDocSet = InsertNewObj(hDocBase, 0, UOI_Obj::TYPE_DOCSET)* to insert a docset in the docbase *hDocBase,* and save the handle of the docset in the *hDocSet:*
Application A sends an instruction *hDoc = InsertNewObj(hDocSet, 0, UOI_Obj:: TYPE_DOC)* to insert a document in the docset *hDocSet,* and save the handle of the document in *hDoc:*
   Define a page object:
   *UOI_Page page;*
   *page.size.w* = w;
   *page.size.h = h;*

Application A and sends an instruction *UOI_Insert(hDoc, 0, &page, &hPage)* to create a page in the document *hDoc* with a width of w and a height of *h,* and save the handle of the page in *hPage:*

Application A sends an instruction *hLayer* = *InertNewObj (hPage, 0, UOI_Obj::TYPE_LAYER)* to insert a layer in page *hPage,* and save the handle of the layer in *hLayer:*

Define a charSize object:

```
     UoI_Charsize    charSize;
     charSize.m_Width = charSize.m_Height = s;
```

Application A sends an instruction *UOI_Insert(hLayer, 0, &charsize)* to set the character size as s;

Define a text object:

```
     UOI_Text text;
     text.m_pText = Duplicate ("Sursen rises with fresh energy");
     text.m_Encoding = UOI_Text:: ENCODE_GB13000;
     text.m_Start.x = x1 ;
     text.m_Start.y = y1;
```

Application A sends an instruction UOI_Insert *(hLayer, 1, &text)* to insert a string *"Sursen rises with fresh energy"* at coordinates *(xl, y1):*
Application A sends an instruction *UOI_Close (hDocBase)* to close the docbase *hDocBase:*
Application B sends an instruction *UOI_Open ("c:llsamplellmydocbase.sep", FALSE, &hDocBase)* to open the docbase *c:\sample\mydocbase.sep,* and save the handle of the docbase in the *hDocBase:*
Application B sends an instruction *UOI_GetHandle(hDocBase, 0, &hDocSet)* to get a pointer to the first docset in the docbase *hDocBase,* and the handle of the first docset is saved in the *hDocSet:*
Application B sends an instruction *UOI_GetHandle (hDocSet, 0, &hDoc)* to get a pointer to the first document in the docset *hDocSet,* and the handle of the first document is saved in the *hDoc:*
Application B sends an instruction *UOI_GetHandle (hDoc, 0, &hPage)* to get a pointer to the first page in the document *hdoc,* and save the handle of the point in the *hPage:*
Application B sends an instruction *UOI_GetPageBmp (hPage, rect, buf)* to get the layout bitmap of the page used for displaying the page:
Application B sends an instruction *UOI_GetHandle (hPage, 0, &hLayer)* to get a pointer to the first layer in the *hPage,* and save the handle of the point in the *hLayer:*
Application B sends an instruction *UOI_GetHandle (hLayer, 0, &hObj)* to get the handle of the first layout object *hObj:*
Application B sends an instruction *UOI_GetObjType (hObj, &type)* to get the type of *hObj:*
Application B sends an instruction *UOI_GetObj (hObj, &charSize)* to find that the object is a character size object and gets the object;
Application B sends an instruction *eharSize.m_Height* *= *2; UOI_SetObj(hObj, &charSize)* to magnify the character height by 100%;
Application B sends an instruction *UOI_GetPageBmp(hPage, rect, buf)* to get the page bitmap and display the page. Now the string "Sursen rises with fresh energy" displayed is in heightened character size.

Operations on layer objects in the above embodiment will be described in detail hereinafter. When an application wants to edit a document, it sends a series of instructions to the DCMS to indicate creating a layer in the current document and inserting the newly edited content in the newly created layer, and the platform software, accoding to the series of instructions, creates a layer and inserts the newly edited content in the newly created layer, withouth modifying or deleting contents in existing layers.

A digital signature object of a layer can be used for guaranteeing that the contents in the layer are not altered or deleted. The contents of the layer may be signed to obtain the digital signature; yet preferably, the contents of the layer and the contents of all layers created before the layer are signed to obtain the digital signature. The signature does not prevent further editing of the document such as inserting new comment into the documents, and the signature always remains valid as long as the newly added contents are placed in a new layer without modifying the layers that are signed. However the signer of the signature is responsible only for the contents before the signature is created and is not responsible for any contents added after the signature is created.

The above technical scheme is a strict scheme of "adding without altering". In another embodiment of the present invention, before the DCMS signs content of a layer to obtain a signature according to an instruction from the application, the application can send an instruction to the DCMS to delete or modify the exsiting content in the layer. In another embodiment of the present invention, even after the application has finished the editing of a layer and the DCMS has already signed the layer, the application also can send an instruction to the DCMS to delete or modify layout objects in the layer, and re-sign the layer after deleting or modifying the layout objects, however, other application is forbidden to delete or modify the layer.

The technical scheme provided in the foregoing description does not allow alteration of existing contents in the document, even not in consideration of paper features and digital signature, all modifications made should be based on a layout object, i.e., editing (adding, deleting, modifying) a layout object does not affect any other layout objects.

In another embodiment, the application may firstly edit the original content or newly added content in a source file (a file which is saved in the format of the application's own and which keeps a full relationship record of all objects in the document, e.g., a .doc file). After finishing the initial editing, the application sends a series of instructions to the DCMS to indicate creating a layer and inserting layout objects which describe the newly edited content in the newly created layer, and further to indicate creating a source file object under the document object to embed the source file. After receiving the instructions of the application, the DCMS creates a layer and inserts the layout objects which describe the newly edited content in the newly created layer, and further creates a source file object under the document object to embed the source file, and embed the source file (e.g., embed as a whole in binary data format) to the node correspongding to the source file object.

When the application wants to edite the document next time, it sends instructions to the DCMS to extract the source file. The DCMS extracts the source file from the document and return it to the application. Then, the application can edit the source file directly. After the second editing process, the application sends a series of instructions to indicate updating the contents of the layer according to the newly edited contents (e.g., by the method of regenerating all after cleaning all), and embedding the modified source file into the source file object again. The DCMS performs corresponding operations. This process is repeated to enable the application to edit the existing contents in the document in a conventional way.

The technical scheme of the present invention can maximize document interoperability. When the precondition of sufficient privileges is ensured, the following functions can be achieved. All types of applications can correctly open, display, and print all types of documents. All types of applications can add new contents to all types of documents without damaging existing signatures in the documents. When no signature exists or an existing signature is allowed to be destroyed, all types of applications can edit existing contents of all types of documents based on layouts. Existing contents of all types of documents can be edited in the conventional way by the original application that created the existing contents in the documents.

It can be seen the management, interoperability and security setting for the document are greatly facilitated by using the layer management. By using the methods provided by the embodiment, every application adds new contents to the existing document contents without altering or deleting any existing document contents; therefore. A page of the document is like a piece of paper on which different people write or draw with different pens while nobody can alter or delete the existing contents. The methods provided by the embodiment are "adding without altering" scheme, which enable the document processing system to be paper fidelity.

When a page in a document is divided into multiple layers, different management and control policies can be applied to different layers to facilitate operations of different applications on the same page (it can be designed so that different applications manage and maintain different layers) and further facilitate source file editing. Layers are also a good way to preserve the history of editing (contents edited in different processes, or on different time, or by different parts are placed in different layers respectively).

In order to guarantee the security of the document processing system, an embodiment of the present invention provides a document security technology. After receiving an operation instruction issued by an application, the DCMS checks whether the operation on the document data indicated by the operation instruction is allowed; if yes, performs the operation on the document data according to the received operation instruction; if not, refuses to perform the operation.

When receiving an operation instruction indicating creating a role object issued by the application, the DCMS creates the role object according to the instruction. Furthermore, after creating the role object, the DCMS returns a key to the application, as a proof when the application logs in as the role. The key is always the private key of a PKI key pair, or a login password or other form. When the key is the private key of a PKI key pair, the DCMS generates the random PKI key pair (e.g., 512-digits RSA keys), and saves the public key in the role object and returns the private key to the application.

When an application logs in as a role, the "challenge-response" mechanism can be employed to enable the security of the private key. Specifically, once receiving the logging in instruction from the application, the DCMS encrypts a random data block (e.g. 128 bytes) with the public key of the role and sends the encrypted data to the application, the application decrypts the data and returns the decrypted data to the DCMS, if the data are correctly decrypted, it is determined that the application does have the private key of the role and logging in is succeeded. The "challenge-response" authentication process may be repeated for several times for double-check. The "challenge-response" mechanism may also include processes as follows. The DCMS sends a random data block to the application; the application encrypts the data with the private key and returns the encrypted data to the DCMS, and the DCMS decrypts the encrypted data with the public key, if the data is correctly decrypted, it is determined that the application does have the private key of the role. When the key of the role is a login password, users of the application have to enter the correct login password.

The application may send an instruction to the DCMS to indicate granting a privilege to a role. The privilege may be on document data (one or multiple objects). The DCMS grants the privilege to the role after receiving the instruction.

The way of the DCMS checking whether the operation on the document data indicated by the operation instruction is allowed may be as follows: recording the privileges of all logging-in roles on the object, if operations on the document data indicated in the instruction is within the privileges, the operations shall be accepted, otherwise error information shall be returned. In addition, the application may log in as multiple roles and the privileges granted to the application are the union or other combination of the privileges of the roles, which is determined by a pre-defined rule.

A preferred method applied to the present invention includes: encrypting corresponding data and controlling privileges with keys, when a role cannot present correct keys, the role does not have corresponding privilege. This preferred method provides better anti-attack performance. The detailed description of the steps of the preferred method is given below.

A PKI key pair is generated, and a protected data sector (usually a subtree corresponding to an object of the abstract document) is encrypted with the encryption key of the PKI key pair. When a role is granted read privilege, the decryption key of the PKI key pair is passed to the role and the role may decrypt the data sector with the decryption key in order to read the data correctly. When a role is granted write privilege, the encryption key of the key PKI pair is passed to the role and the role may encrypt modified data with the decryption key in order to write data into the data sector correctly.

Since the encryption / decryption efficiency of the PKI keys is low, a symmetric key may be used for encrypting the data sector and the encryption key further encrypts the symmetric key while the decryption key may decrypts the encrypted symmetric key data to retrieve the correct symmetric key. The encryption key may be further used for attaching a digital signature to the data sector to prevent a role with the read privilege only from modifying the data when the role is given the symmetric key. In such a case a role with the write privilege attaches a new signature to the data sector every time when the data sector is modified; therefore the data will not be modified by any role without the write privilege.

When a role is given the encryption key or decryption key, the encryption key or decryption key may be saved after being encrypted by the public key of the role, so that the encryption key or decryption key can only be retrieved with the private key of the role.

When receiving a instruction issuing by the application and indicating sign a target object to obtain a signature, the DCMS signes the subtree starting from the node corresponding to the object to obtain the signature.

The subtree is regularized first so that the signature will be free from any effects of physical storage variation, i.e., by logically equivalent alterations (e.g., changes of pointer caused by the changes of storage position).

When the storage data corresponding to the subtree to be signed are also tree-structured (e.g. XML tree mentioned before), the regularization method includes:

Traversing (in a depth-first traversal or width-first traversal) all nodes (i.e., target object and the sub-object thereof) in the subtree whose root node is the target object , regularizing each node in the order of the traversal and joining the regularization result of each node.

The regularization of a node in the subtree includes: calculating the HASH value of the subnode number of the node, calculating the HASH values of the node type and node attributes, joining the obtained HASH values of the node type and node attributes right behind the HASH value of the subnode number according to the predetermined order, and calculating the HASH value of the joined result to obtain the regularization result of the node. When an object also needs to be signed to obtain the signature because the object is referenced by a node in the subtree, the object is regarded as a subnode of the node and is regularized in the method described above.

The regularization of a node in the subtree may also include: joining the sub-node number of the node, the node type and node attributes in an order with separators in between, and calculating the HASH value of the joined result to obtain the regularization result of the node.

The regularization of a node in the subtree may include: joining the subnode number length, the node type length, and the node attribute lengths in an order with separators in between, and further joining the already joined lengths with the sub-node number, node type and node attributes, then the regularization result of the node is obtained.

In summary, the step of regularizing a node in the subtree may include the following step: joining original values or transformed values (e.g., HASH values, compressed values) of: the subnode number, node type, and node attributes, and the lengths of the subnode number/node type/node attributes (optional), in a predetermined order directly or with separators in between. The predetermined order includes any predetermined order of arranging the subnode number length, node type length, node attribute lengths, subnode number, node type, and node attributes.

It is easy to illustrate various modifications of the technical scheme of the present invention. For example, the scheme may include joining the subnode number of every node with separators in between in the order of depth-first traversal and then joining with the regularization results of other data of every node. Any method that arranges the subnode numbers, node types and node attributes of all nodes in the subtree in a predetermined order constitutes a modification of this embodiment.

After the regularization, the HASH value of the regularization can be generated and the signature can be obtained by encrypting the HASH value with the private key of the role according to the techniques in the prior art, which will not be described herein.

In another embodiment, the way of the DCMS signing the document data corresponding to the subtree to obtain the signature is as follows: traversing all nodes in the subtree, sign the document data corresponding to each node to obtain a signature, and jointing the signatures obtained. The traversing and jointing methods are similar to the above embodiments.

The DCMS has information security management control functions for documents, e.g., role-based fine-grained privilege management, and corresponding operation instructions are defined in the interface standard.

By using the document security technology provided by the present invention, the document security can be applied to arbitrary segments within a document and the encryption and signature also can be applied to arbitrary logic data, so as to provide a fine-grained security management approach. In addition, by using the document security technology, information security is integrated into the core layer of document processing, and the security mechanism and document processing mechanism are combined into one module, so More space is thus provided for security management and corresponding codes can thus be hidden deeper and used more effectively for defending illegal attack and improving security and reliability.

It should be noted that the document security techniques provided by the present invention, including role-oriented privilege management, role authentication, logging in of multiple roles, the regularization method for tree structure, the fine-grained privilege management unit, encryption-based privilege granting, etc., can be applied to the unstructured data processing system and other practical environments as well as the document processing system provided by the present invention.

One skilled in the art should understand that, the technical schemes about the text document and the DCMS described in the above embodiments can also be applied to the unstructured data and the corresponding platform software.The foregoing description covers the preferred embodiments of the present invention and is not intended to limit the protective scope thereof. All the modifications, equivalent replacements, or improvements in the scope of the present invention's spirit and principles are included within the protective scope of the present invention.

## Claims

1. A method for processing unstructured data data provided comprises:
by an application, sending at least one instruction to a platform software, to issue an operation on unstructured data, wherein, the at least one instruction is independent with the storage form of the unstructured data; and
by the platform software, performing the operation on the unstructured data according to the at least one instruction; wherein, the platform software has the function of processing the data within the unstructured data.

2. A method of claim 1, wherein, the at least one instruction describes an operation on abstract information corresponding to the unstructured data, wherein, the abstract information is independent with the storage form of the unstructured data;
before by the platform software, performing the operation on the unstructured data according to the at least one instruction, the method further comprises:
by the platform software, mapping the operation on the abstract information described by the at least one instruction to the operation on the unstructured data.

3. A method of claim 2, wherein, before performing the operation on the unstructured data, the method comprises:
by the platform software, establishing the corresponding relationship between the abstract information and the unstructured data.

4. A method of claim 3, wherein, by the platform software, establishing the corresponding relationship between the abstract information and the unstructured data comprises:
by the platform software, opening the unstructured data, parsing the unstructured data and obtaining the abstract information; or
by the platform software, receiving an instruction indicating creating the abstract information from the application, and creating the unstructured data according to the instruction.

5. A method of claim 1 or 2, wherein, the storage form of the unstructured data is the storage format of the unstructured data.

6. A method of claim 1 or 2, wherein, the unstructured data is one of a disk file, plural disk files, a portion of disk file, a database field, plural database filed, a portion of a disk partition.

7. A method of claim 2, wherein, the abstract information describe one or multiple abstract features of unstructured data.

8. A method of claim 7, wherein, the abstract features contain representation effect information, and/or security control information, and/or document organization information and/or interactive information, and/or metadata information.

9. A method of claim 7 or 8, wherein, the unstructured data comprise text documents, multi-dimensional data, audio data, and/or video data.

10. A method of claim 8, wherein, the presentation effect comprises layout, sound, dynamic Visual effects and/or static multi-dimensional visual effects

11. A method of any of claims 2 to 10, wherein, the abstract information comprises one or multiple objects.

12. A method of claim 11, wherein, the platform software has the functions of adding, deleting, reading and writing any object in the abstract information.

13. A method of claim 6 or 7, wherein, the abstract information is tree-structured.

14. A method of any of claims 2 to 13, wherein, the abstract information confirms to an abstract model;
the abstract information describing one or multiple abstract features of unstructured data comprises: obtaining the abstract information by describing the one or multiple abstract feature using the abstract model.

15. A method of claim 14, wherein, the abstract model defines the types of the object and the relationship among the objects.

16. A method of claim 14 or 15, wherein, the abstract model is used to describe any representation effect.

17. A method of claim 11, wherein, the objects comprise: a document object, page object and an object used to describe layout

18. A method of claim 17, wherein, the object used to describe layout is any one or any combination of an object for text, object for graphics and object for image

19. A method of claim 18, wherein, the object used to describe layout is any one or any combination of: an object for status, object for text, object for line, object for curve, object for arc, object for path, object for gradient color, object for image, object for streaming media, object for metadata, object for note, object for semantic information, object for source file, object for script, object for plug-in, object for binary data stream, object for bookmark, and object for hyperlink.

20. A method of any of claims 11 to 19, wherein, the objects further comprise a docbase object and/or a docset object,

21. A method of claim 17, wherein, the objects further comprise module comprises a layer object and/ or an object stream object.

22. A method of any of claims 11 to 21, wherein, the objects further comprise a role object and access privilege of the role

23. A method of claim 21, wherein, the access privilege of the role comprises access privilege of the role on at least one object of the abstracted information

24. A method of claim 22, wherein, the access privilege of the role comprises any one or any combination of: read privilege, write privilege, copy privilege, print privilege, re-license privilege and bereave privilege.

25. A method of any of claims 1 to 24, wherein, the at least one instruction confirms to an interface standard, and the interface standard further define the form of the at least one instruction.

26. A method of claim 25, wherein, an operation action and an object to be operated are defined respectively and the at least one instruction consists of the combination of the operation action and the object to be operated.

27. A method of claim 26, wherein, one instruction is defined for each legal operation on each object.

28. A method of claim 25, wherein, the interface standard further defines the way of issuing an instruction by the application to the platform software.

29. A method of claim 28, wherein, the way of issuing an instruction by the application to the platform software comprises:
generating a command string in a predefined standard form, issuing the command string in the predefined standard form by the application to the DCMS; or
by the platform software, providing an interface function to be invoked by the application; and by the application, invoking the interface function; or
by the application, invoking one method on one object class, to DCMS.

30. A method of claim 29, wherein, the command string is a character string.

31. A method of claim 30, wherein, the character string is described by an Extensible Markup Language (XML).

32. A method of claim 31, wherein, the predefined instructions contain the combination of the operation action and the object to be operated, the operation action corresponding to an XML element and the object to be operated is a sub-element of XML element corresponding to the operating action.

33. A method of any of claims 1 to 32, wherein, the operation is one of: operation for getting information, operation for setting object attribute, operation for inserting a new object, operation for deleting an object, and operation for querying

34. A method of any of claims 25 to 33, wherein, the instruction defiend in the interface standard comprises instructions used for creating any layout.

35. A method of any of claims 1 to 34, wherein, the platform software further returns result of the operation to the application.

36. A system for processing unstructured data provided comprises:
an application, adapted to send at least one instruction to a platform software, to issue an operation on unstructured data, wherein, the at least one instruction is independent with the storage form of the unstructured data; and
the platform software, adapted to perform the operation on the unstructured data according to the at least one instruction; wherein, the platform software has the function of processing the data within the unstructured data.

37. Platform software provided has the function of processing data within the unstructured data, is adapted to:
receive at least one instruction sent by an application, wherein, the at least one instruction indicates an operation on the unstructured data, and is independent of the storage form of the unstructured data;
perform the operation on the unstructured data according to the at least one instruction.

38. An application provided, is adapted to:
send at least one instruction to platform software to issue an operation on the unstructured data, wherein, the at least one instruction is independent of the storage form of the unstructured data, and the platform software has the function of processing data within the unstructured data and performs the operation on the unstructured data according to the at least one instruction.

39. A method for processing unstructured data also provided comprises:
by a first application, issuing a first instruction to platform software, to create first abstract information;
by the platform software, receiving the first instruction and creating unstructured data corresponding to the first abstract information;
by a second application, issuing a second instruction to open the unstructured data created by the platform software;
by the platform software, receiving the second instruction, and opening and parsing the unstructured data, generating and returning second abstract information corresponding to the unstructured data to the second application;
wherein the first instruction and the second instruction conform to the same interface standard.

40. A method of claim 39, wherein, the first abstract information is the same with or similar to the second abstract information.

41. A method of claim 39, wherein, the unstructured data comprises representation information.

42. A method of claim 41, wherein, the representation effect of the storage data of the first appliacation and the second application are the same or similar.

43. A system for processing unstructured data data also provided comprises:
a first application, adapted to issue a first instruction to platform software to acquire first abstract information;
the platform software, adapted to receive the first instruction and create unstructured data corresponding to the first abstract information;
a second application, adapted to issue a second instruction to open the unstructured data created by the platform software;
the platform software, further adapted to receive the second instruction, open and parse the unstructured data, acquire and return second abstract information corresponding to the unstructured data to the second application;
wherein the first instruction and the second instruction conform to the same interface standard.

44. A method for processing unstructured data also provided comprises:
by first platform software, parsing first unstructured data stored in a first format, acquiring first abstract information corresponding to the first unstructured data;
by a application, issuing a first instruction to acquire all information of the first abstract information; issuing a second instruction to second platform software to inform second abstract information same or similar with the first abstract information;
by the second platform software, creating second unstructured data stored in second format and corresponding to the second abstract information;
wherein the first instruction and the second instruction conform to the same interface standard.

45. A system for processing unstructured data data also provided comprises:
first platform software, adapted to parse first unstructured data stored in a first format, and acquire first abstract information corresponding to the first unstructured data;
a application, adapted to issue a first instruction to acquire all information of the first abstract information; issue a second instruction to second platform software to inform second abstract information same or similar with the first abstract information;
the second platform software, adapted to create second unstructured data stored in second format and corresponding to the second abstract information;
wherein the first instruction and the second instruction conform to the same interface standard.
by first platform software, parsing first unstructured data stored in a first format, acquiring first abstract information corresponding to the first unstructured data;
by a application, issuing a first instruction to acquire all information of the first abstract information; issuing a second instruction to second platform software to inform second abstract information same or similar with the first abstract information;
by the second platform software, creating second unstructured data stored in second format and corresponding to the second abstract information;
wherein the first instruction and the second instruction conform to the same interface standard.
